## Europäisches Patentamt
## European Patent Office
## Office européen des brevets

(11) Veröffentlichungsnummer: **0 280 092 B1**

## EUROPÄISCHE PATENTSCHRIFT

(45) Veröffentlichungstag der Patentschrift: **09.10.91**

(51) Int. Cl.⁵: **B65D 85/57**

(21) Anmeldenummer: **88101654.7**

(22) Anmeldetag: **05.02.88**

(54) **Längs einer Kante offene Schallplattentasche.**

(30) Priorität: **21.02.87 DE 8702715 U**

(43) Veröffentlichungstag der Anmeldung:
**31.08.88 Patentblatt 88/35**

(45) Bekanntmachung des Hinweises auf die
Patenterteilung:
**09.10.91 Patentblatt 91/41**

(84) Benannte Vertragsstaaten:
**AT BE CH DE ES FR GB IT LI NL SE**

(56) Entgegenhaltungen:
**DE-A- 1 629 791**
**FR-A- 2 421 816**
**US-A- 3 322 328**
**US-A- 3 337 119**

(73) Patentinhaber: **Ludwig Fr. Noltemeyer GmbH**
**Hildesheimer Strasse 65**
**W-3300 Braunschweig(DE)**

(72) Erfinder: **Kurlbaum, Friedrich**
**Am Bruchkamp 17**
**W-3300 Braunschweig(DE)**
Erfinder: **Mörig, Uwe**
**Völklinger Strasse 23**
**W-3300 Braunschweig(DE)**

(74) Vertreter: **Döring, Rudolf, Dr.-Ing.**
**Patentanwälte Dr.-Ing. R. Döring Dipl.-Phys.**
**Dr. J. Fricke Jasperallee 1a**
**W-3300 Braunschweig(DE)**

## Beschreibung

Die Erfindung betrifft eine längs einer Kante offene Schallplattentasche aus einem Zuschnitt aus Papier für laserabtastbare Kleinschallplatten (Compactdisc), bei welcher die Vorder- und Rückwand über eine Faltlinie miteinander verbunden sind, und bei der sich an die Vorder- oder Rückwand seitliche Kleberandstreifen über Faltlinien anschließen.

Schallplattentaschen vorgenannter Art haben den Nachteil, daß sich bei der Handhabung dieser mit Schallplatten gefüllten Taschen Abdrücke auf der Schallplattenoberfläche bilden. Die Schallplattenoberfläche ist mit einer Schutzschicht versehen, auf der sich Druckspuren abbilden, wenn die Tasche ausschließlich aus Papier besteht und bei der Handhabung bzw. beim Erfassen der gefüllten Tasche die Taschenwandung örtlich etwas fester gegen die Schallplatte gedrückt wird. Mit Abdrücken versehene Schallplatten erwecken den Eindruck, als seien sie bereits benutzt worden.

Der Erfindung liegt die Aufgabe zugrunde, eine Schallplattentasche der vorgenannten Art so auszubilden, daß bei ihrer Handhabung mit einer darin befindlichen Schallplatte keine Abdrücke auf der Platte in Erscheinung treten und eine unbeeinflußte Oberfläche der Schallplatte erhalten bleibt, auch wenn die Schallplatte mehrfach aus der Hülle herausgenommen und wieder in die Hülle hineingesteckt wird.

Zur Lösung vorstehender Aufgabe sieht die Erfindung vor, daß diejenige Seite des Zuschnittes der Schallplattentasche, welche die Innenseite der Tasche bildet, vollflächig mit einer Kunststoffbeschichtung in einer Stärke von 15 bis 30 μm versehen ist, und daß zwischen den Kleberandstreifen und den damit verbundenen Gegenflächen eine lösungsmittel- und weichmacherfreie Haftklebe- oder Hotmeltschicht vorgesehen ist.

Durch die Kunststoffbeschichtung ergibt sich eine glatte Innenoberfläche der Tasche, die auch bei örtlich stärkerem Andruck zu keinerlei Beeinträchtigung der Plattenoberfläche führt. Um trotz der vollflächigen Kunststoffbeschichtung eine sichere Verbindung der Vorder- und Rückwand durch die Kleberandstreifen zu gewährleisten, ist die genannte Haftklebe- oder Hotmeltschicht vorgesehen. Mit derartigen Klebstoffschichten können auch kunstoffbeschichtete Flächen dauerhaft miteinander verbunden werden.

Zwar wäre auch die Ausrüstung der eingangs genannten Schallplattentaschen mit einem Innenfutter möglich, jedoch bereitet dies erhebliche technische Schwierigkeiten und führt außerdem zu einer beachtlichen Kostensteigerung, auch im Hinblick auf die hierfür notwendigen maschinellen Einrichtungen.

Die vollflächige Beschichtung des Zuschnittes hat den großen Vorteil, daß diese Beschichtung bei der Herstellung der Zuschnitte bzw. der Taschen von der Rolle auf eine Seite der Rollenbahn aufgebracht werden kann, ehe aus der Rollenbahn dann die Zuschnitte herausgetrennt und mit den erforderlichen Faltlinien versehen sowie im Bereich der Kleberandstreifen auch mit der Haftklebe- oder Hotmeltschicht ausgerüstet werden, um nachfolgend den Zuschnitt durch Faltung in die Tasche zu überführen.

Zweckmäßig ist es, wenn die Kunststoffschicht als Polyäthylenschicht unmittelbar auf das Papier aufextrudiert ist. Auf diese Weise wird eine unmittelbare Verbindung zwischen dem Papier und der Kunststoffschicht in Form der Polyäthylenschicht hergestellt, wobei die Haftfähigkeit der Polyäthylenschicht aufgrund der Extrusionswärme ausgenutzt wird.

Bei einer anderen Ausführungsform ist die Kunststoffschicht als Polyäthylen- oder Polypropylenschicht auf das Papier aufkaschiert unter Zwischenanordnung einer lösungsmittelfreien Polyurethan-Klebstoffschicht in einer Stärke von 3 bis 4 g/m². Mit der verhältnismäßig geringen Menge an lösungsmittelfreiem Polyurethanklebstoff wird eine vollflächige und dauerhafte Verbindung der Kunststoffschicht mit dem Papier erreicht, so daß weder in den Zonen der Faltlinien noch an den Schnitträndern irgendwelche Ablösungen der Kunststoffschicht von dem Papier auftreten. Durch die relativ dünne Kunststoffschicht wird die Flexibilität des Papieres praktisch nicht beeinträchtigt. Vielmehr erfolgt durch die glatte Innenfläche der Tasche eine Verbesserung bei der Befüllung, weil die Platten besser in die Taschen hineingleiten können, ohne daß jedoch die Gefahr einer Beeinträchtigung ihrer Oberflächen auftritt.

In der Zeichnung ist ein Ausführungsbeispiel für einen Zuschnitt der Schallplattentasche nach der Erfindung wiedergegeben.

Fig. 1 zeigt eine Draufsicht auf den Zuschnitt,

Fig. 2 gibt in einer vergrößerten Schnittdarstellung längs der Schnittlinie II-II zwei verschiedene Varianten des beschichteten Zuschnittes wieder.

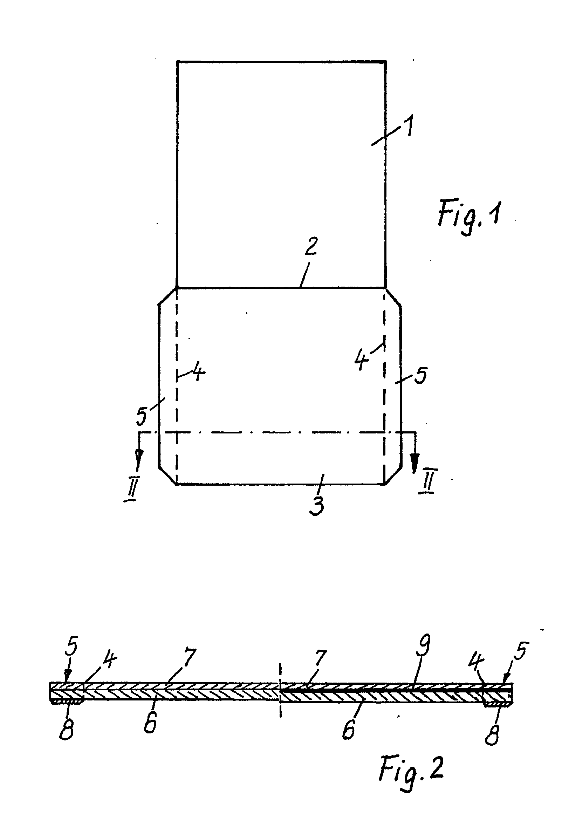

In der Fig. 1 ist die Draufsicht auf die vollflächig beschichtete Seite des Zuschnittes wiedergegeben, d.h. derjenigen Seite, die späterhin die Innenseite der Tasche bildet, mit welcher die Schallplatte unmittelbar in Berührung kommt. Die Vorderwand 1 ist in dem Beispiel über eine Faltlinie 2 mit der Rückwand 3 verbunden.

An gegenüberliegenden Seiten der Rückwand 3 schließen sich über Faltlinien 4 zwei Kleberandstreifen 5 an, die in ihren Endbereichen abgeschrägt sind.

In der Fig. 2 sind die Schicht 6 und die darauf befestigte Kunststoffschicht 7 erkennbar, wobei im linken Teil der Fig. 2 die Kunststofschicht 7 unmittelbar auf der Papierschicht 6 befestigt ist, wie dies durch Aufextrudieren ohne weiteres erzielt werden kann. Der Kleberandstreifen 5 ist auf seiner der Kunststoffschicht 7 abgewandten Seite mit einer Haftklebe- oder Hotmeltschicht 8 ausgerüstet. Diese Schicht kommt nach oben zu liegen, wenn der Kleberandsteifen 5 um die Faltlinie 4 auf die Kunststoffschicht 7 der Rückwand 3 gefaltet wird.

Im rechten Teil ist die Kunststoffschicht 7 unter Zwischenanordnung einer Polyurethan-Klebstoffschicht 9 auf der Papierschicht 6 befestigt. Die Aufbringung der Kunststoffschicht 7 gemäß der Ausführung im rechten Teil der Fig. 2 erfolgt durch Aufkaschieren, wobei die dabei verwendete Polyurethan-Klebstoffschicht 9 nur in einer Stärke von 3 bis 4 g/m² erforderlich ist, um eine vollflächige und sichere Haftung der Kunststoffschicht auf der Papierschicht zu gewährleisten.

Im Falle des Aufextrudierens der Kunststoffschicht 7 auf die Papierschicht 6 kommt als Kunststoff praktisch nur Polyäthylen in Betracht, während zum Aufkaschieren sowohl Polyäthylen als auch Polypropylen verwendet werden kann.

## Patentansprüche

1. Längs einer Kante offene Schallplattentasche aus einem Zuschnitt aus Papier für laserabtastbare Kleinschallplatten (Compactdisc), bei welcher die Vorder- und Rückwand über eine Faltlinie miteinander verbunden sind und bei der sich an die Vorderoder Rückwand seitliche Kleberandstreifen über Faltlinien anschließen, **dadurch gekennzeichnet,** daß diejenige Seite des Zuschnittes, welche die Innenseite der Tasche bildet, vollflächig mit einer Kunststoffbeschichtung (7) in einer Stärke von 15 bis 30 μm versehen ist und daß zwischen den Kleberandstreifen (5) und den damit verbundenen Gegenflächen eine lösungsmittel- und weichmacherfreie Haftklebe- oder Hotmeltschicht (8) vorgesehen ist.

2. Schallplattentasche nach Anspruch 1, **dadurch gekennzeichnet,** daß die Kunststoffschicht (7) als Polyäthylenschicht unmittelbar auf das Papier (6) aufextrudiert ist.

3. Schallplattentasche nach Anspruch 1, **dadurch gekennzeichnet,** daß die Kunststoffschicht (7) als Polyäthylen- oder Polypropylenschicht auf des Papier (6) aufkaschiert ist unter Zwischenanordnung einer lösungsmittelfreien Polyurethan-Klebstoffschicht (8) in einer Stärke von 3 bis 4 g/m².

## Claims

1. A disc pooket which is open along one edge and comprising a blank made of paper for laser-scannable mini discs (compact discs), in which the front and the rear walls are connected together via a fold line and in which lateral adhesive edge strips are connected to the front or rear wall via fold lines, **characterized in that** that side of the blank which forms the inside of the pocket is provided all over with a plastics coating (7) in a thickness of 15 to 30 μm and that a solvent-and softener-free bonding adhesive or hot melt layer (8) is provided between the adhesive edge strips (5) and the counter surfaces connected thereto.

2. A disc pocket according to claim 1, **characterised in that** the plastics layer (7) is extruded directly on to the paper (6) as a polyethylene layer.

3. A disc pocket according to claim 1, **characterized in that** the plastics layer (7) is laminated onto the paper (6) as a polyethylene or polypropylene layer with intermediate arrangement of a solvent-free polyurethane adhesive layer (8) in a thickness of 3 to 4 g/m2.

## Revendications

1. Pochette pour disque, ouverte sur un côté, destinée aux minidisques (disques compacts), réalisée à partir d'une pièce découpée en papier, les parois avant et arrière de la pochette étant reliées l'une à l'autre par l'intermédiaire d'une ligne de pliage et des bandes latérales adhésives étant reliées, par l'intermédiaire de lignes de pliage, à la paroi avant ou arrière de la pochette, caractérisée en ce que la partie de la pièce découpée, qui constitue la face intérieure de la pochette, est recouverte sur toute sa surface d'une couche plastique (7) d'une épaisseur de 15 à 30 μm, et en ce qu'une couche (8) d'adhésif ou de colle thermofusible exempte de solvants et de plastifiants est prévue entre les bandes latérales adhésives (5) et les surfaces conjuguées correspondantes.

2. Pochette pour disques selon la revendication 1, caractérisée en ce que la couche plastique (7) est appliquée par couchage par extrusion, sous forme d'une couche de polyéthylène, directement sur le papier (6).

3. Pochette pour disques selon la revendication 1, caractérisée en ce que la couche plastique (7) est contrecollée sur le papier (6), sous forme d'une couche de polyéthylène ou de polypropylène, par interposition d'une couche (8) de colle polyuréthanne exempte de solvants, ayant une épaisseur de 3 à 4 g/m$^2$.

Fig.1

Fig.2